# DEMANDE DE BREVET EUROPEEN

(11) **EP 1 533 496 A1**
(43) Date de publication de la demande: **25.05.2005**
(21) Numéro de dépôt: 03292857.4
(22) Date de dépôt: 18.11.2003
(51) Int. Cl.: F02D 9/02, F02M 25/07, F02D 41/02

(54) **Système de motorisation comportant un moteur diesel et un catalyseur**

(71) Demandeur: Renault s.a.s., 92100 Boulogne Billancourt (FR)
(72) Inventeur: Krebs, Laurent, 91260 Antony (FR); Brun, Eric, 75014 Paris (FR)
(74) Mandataire: Cemeli, Eric

(57) **Abrégé**

Un système de motorisation comporte un moteur de type Diesel (1), un circuit d'air (13, 14) pour conduire de l'air au moteur, et un catalyseur (3) recevant des gaz d'échappement issu du moteur (1) par l'intermédiaire d'une tubulure d'échappement (16), des moyens de détermination de la température du catalyseur, au moins une vanne (22) sur le circuit d'air (13, 14) pour étrangler sur commande le passage de l'air, et des moyens de commande (24) agissant sur la vanne (22) en fonction de la température du catalyseur (3). Une augmentation de la température des gaz d'échappement arrivant au catalyseur (3) est attendue lors d'un étranglement du passage d'air.

## Description

L'invention concerne un système de motorisation comportant un moteur à combustion interne de type Diesel et un catalyseur dont la température de fonctionnement est optimisée.

Le catalyseur équipant un moteur à combustion interne de type Diesel est prévu pour diminuer le taux d'imbrûlés dans les gaz d'échappement, que ce soit des hydrocarbures imbrûlés, regroupés sous la formule générique HC, ou du monoxyde de carbone CO. Il nécessite pour remplir sa fonction d'avoir atteint une température suffisante, dite température d'amorçage. La mise en température du catalyseur est en général obtenue par la chaleur apportée par les gaz d'échappement eux même, grâce à leur température suffisante à la sortie des chambres de combustion du moteur. Une fois la température d'amorçage atteinte, l'oxydation des imbrûlés produit également de la chaleur qui entretient la température du catalyseur.

Les contraintes normatives de dépollution croissantes orientent vers une entrée en fonction du catalyseur plus rapide après le démarrage du moteur. Pour cela, il est nécessaire d'atteindre rapidement la température d'amorçage. Par ailleurs, dans le cas d'un fonctionnement prolongé à faible charge, la température du catalyseur diminue et risque de descendre au-dessous de la température d'amorçage. Pour résoudre ces problèmes, il a été proposé d'isoler thermiquement une tubulure d'échappement reliant le moteur au catalyseur, pour que les gaz arrivant au pot n'aient pas eu la possibilité de se refroidir. Cependant, cette solution nécessite l'emploi de matériaux devant résister à des températures élevées et qui sont plus chers que les matériaux classiques. De plus, la montée en température n'est pas suffisamment rapide au regard du résultat souhaité.

Il a également été proposé d'isoler thermiquement la tubulure d'admission pour augmenter la température des gaz admis. Cependant, l'efficacité de cette méthode n'est pas suffisante.

Il a également été suggéré d'installer des systèmes chauffants électriques de type grille métallique à l'admission ou à l'échappement pour augmenter la température des gaz d'échappement arrivant au catalyseur. Cette solution coûte cher également, et demande d'augmenter les capacités du réseau électrique dans le véhicule, pour pouvoir fournir une puissance suffisante au démarrage du moteur.

On connaît par ailleurs un moteur Diesel comportant un système de recyclage de gaz d'échappement vers l'admission. Ce recyclage a pour objectif de diminuer la concentration en azote du mélange de gaz dans la chambre de combustion aux points de fonctionnement à faible charge. Par cette diminution d'azote, la production d'oxydes d'azote Nox, considérés comme des gaz polluants, se trouve diminuée. Pour bénéficier de cet effet également à moyenne charge, un refroidisseur est installé sur le circuit de recyclage de gaz, pour augmenter la densité des gaz admis dans les chambres de combustion par diminution de leur température. Le refroidissement des gaz circulant dans le refroidisseur a pour effet de diminuer l'apport de chaleur par les gaz d'échappement arrivant au catalyseur.

Un perfectionnement a été apporté en proposant un circuit de dérivation monté en parallèle avec le refroidisseur, une vanne étant prévue pour sélectionner une circulation des gaz recyclés dans le circuit de dérivation ou dans le refroidisseur. Ainsi, le refroidisseur n'est pas mis en service lorsque la température des gaz d'échappement a besoin d'être maintenue à un niveau élevé. Cette solution n'est cependant pas suffisante en soi pour garantir le niveau de température du catalyseur.

C'est donc un objectif de l'invention de proposer un système de motorisation à moteur Diesel garantissant une montée rapide de la température du catalyseur ainsi que son maintien, même pendant un fonctionnement à faible charge.

Avec cet objectif en vue, l'invention a pour objet un système de motorisation comportant un moteur de type Diesel, un circuit d'air pour conduire de l'air au moteur, et un catalyseur recevant des gaz d'échappement issu du moteur par l'intermédiaire d'une tubulure d'échappement, caractérisé en ce qu'il comporte en outre des moyens de détermination de la température du catalyseur, au moins une vanne sur le circuit d'air pour étrangler sur commande le passage de l'air, et des moyens de commande agissant sur la vanne en fonction de la température du catalyseur, une augmentation de la température des gaz d'échappement arrivant au catalyseur étant attendue lors d'un étranglement du passage d'air.

Lorsqu'un moteur Diesel classique fonctionne à faible charge, l'air est en excès dans la chambre de combustion. La quantité de carburant injectée est directement liée au niveau de charge du moteur. La chaleur libérée par la combustion du carburant est pour une part transformée en travail moteur, et pour une autre part permet de chauffer les gaz d'échappement, et en particulier l'air en excès dans la chambre de combustion. Selon l'invention, les moyens de détermination de la température permettent de connaître l'état du catalyseur et d'agir par l'intermédiaire de la vanne sur la quantité d'air admis dans les chambres de combustion. Une restriction du passage d'air provoque un remplissage moindre des chambres de combustion.

En réduisant la quantité d'air admis, la même quantité de chaleur se répartit sur une quantité de gaz plus faible, ce qui se traduit par une température plus élevée des gaz d'échappement. De plus, la densité des gaz dans la chambre de combustion étant moindre, les échanges thermiques avec le cylindre sont moindres. Ainsi, les gaz d'échappement peuvent amener ou maintenir le catalyseur à une température plus importante. Grâce à l'invention, le catalyseur a une température de fonctionnement qui est maintenue au-dessus d'un seuil suffisant pour garantir son fonctionnement. De plus, comme la combustion dans la chambre s'opère à plus forte température, la part de gaz imbrûlés diminue, ce qui réduit une source de pollution.

Dans un mode de réalisation particulier, le système de motorisation comporte un circuit de recyclage des gaz d'échappement débouchant dans la tubulure d'admission en amont de la vanne. Ainsi, l'invention peut aussi être mise en oeuvre avec un circuit de recyclage des gaz. La position de l'arrivée du circuit de recyclage en amont de la vanne permet de régler entièrement la quantité de gaz admis dans les chambres de combustion sans influer sur la proportion de gaz de recyclage.

Le besoin de réchauffer les gaz d'échappement apparaît essentiellement aux faibles régimes et à faible charge du moteur. Aussi, les moyens de commande pilotent un étranglement du passage d'air quand la vitesse de rotation du moteur est inférieure à 2000 tours par minute et une pression moyenne effective dans les chambres de combustion est inférieure à 4 bars. La pression moyenne effective est la pression moyenne dans une chambre de combustion lors de la phase de détente. Elle caractérise la charge du moteur, ou, autrement dit, le couple que peut fournir le moteur.

L'invention a aussi pour objet un procédé de commande d'un système de motorisation comportant un moteur de type Diesel, un circuit d'air pour conduire de l'air au moteur et un catalyseur recevant des gaz d'échappement issu du moteur par l'intermédiaire d'une tubulure d'échappement. Selon le procédé de l'invention, on détermine la température du catalyseur, et on agit sur au moins une vanne du circuit d'air pour étrangler le passage de l'air, en fonction de la température du catalyseur, pour provoquer une augmentation de la température des gaz d'échappement arrivant au catalyseur.

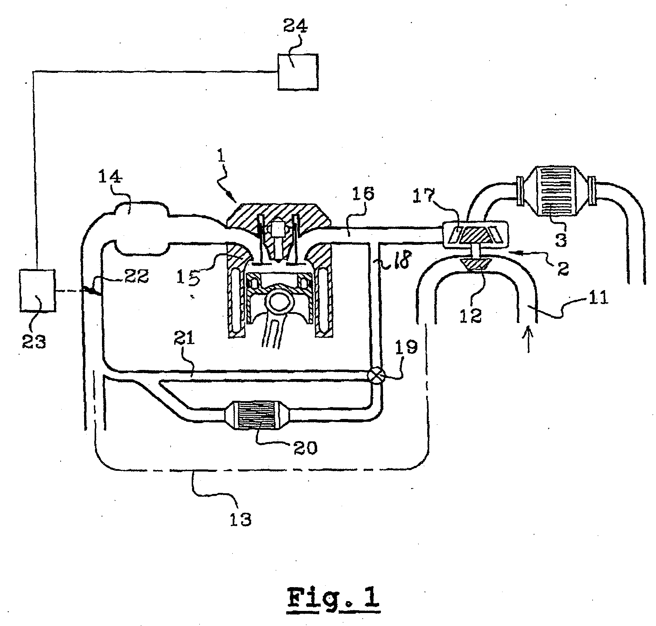

L'invention sera mieux comprise et d'autres particularités et avantages apparaîtront à la lecture de la description qui va suivre, la description faisant référence à la figure 1 qui est une vue schématique d'un système de motorisation conforme à l'invention.

Un système de motorisation selon l'invention, tel que représenté sur la figure 1, comporte un moteur 1 du type Diesel suralimenté par un turbocompresseur 2 et dont les gaz d'échappement sont traités par un catalyseur 3. Le moteur est alimenté en air par un circuit d'air comprenant une prise d'air 11, un compresseur 12 du turbocompresseur 2, une conduite de refoulement 13 et une tubulure d'admission 14 débouchant dans des chambres de combustion du moteur 1, une seule chambre 15 étant représentée.

Les gaz d'échappement produits par la combustion sont évacués de la chambre 15 par une tubulure d'échappement 16, traversent une turbine 17 du turbocompresseur, puis le catalyseur 3. Un circuit de recyclage des gaz d'échappement comporte un piquage 18 sur la tubulure d'échappement, une vanne de sélection 19 orientant les gaz d'échappement vers la conduite de refoulement soit en passant par un refroidisseur 20, soit par une conduite directe 21.

Selon l'invention, une vanne 22 est insérée dans le circuit d'air entre la sortie de la conduite directe 21 et du refroidisseur 20 et l'entrée de la tubulure d'admission 14. La vanne 22 permet de faire varier la section de passage d'air entre une ouverture complète et un étranglement partiel. Un actionneur 23 agit sur la vanne pour déterminer le degré d'ouverture de celle-ci. Il reçoit une consigne en provenance de moyens de commande 24. Ceux-ci déterminent la consigne en fonction d'informations reçues du système de motorisation, telles que la température du catalyseur, la vitesse de rotation du moteur, sa température, une valeur représentative de la charge du moteur comme la quantité de carburant injectée ou le couple fourni par le moteur.

Le fonctionnement du système de motorisation selon l'invention va être décrit maintenant. En fonction des informations reçues, les moyens de commande 24 déterminent s'il y a lieu de commander un réchauffement des gaz d'échappement. Si les gaz d'échappement ont besoin d'être plus chauds, les moyens de commande délivrent à l'actionneur 23 une consigne pour réduire l'ouverture de la vanne 22 et ainsi diminuer le remplissage de la chambre de combustion, avec l'effet sur la température des gaz d'échappement qui a été décrit plus haut.

A titre d'exemple, des simulations ont permis de comparer le fonctionnement du moteur à 1500 tr/min quand la vanne est complètement ouverte, ce qui correspond au fonctionnement conventionnel (cas 1), ou quand elle est partiellement fermée, ce qui correspond au fonctionnement selon l'invention (cas 2). Les paramètres d'injection sont adaptés au deux cas de fonctionnement. Les données qui sont exposées sont :
- Padm : pression dans la tubulure d'admission en bar absolu ;
- Tavt : température des gaz d'échappement avant la turbine 17 ;
- Tapt : température des gaz d'échappement après la turbine 17.

Les résultats sont présentés dans le tableau 1.

**Tableau 1.**

| | Cas 1 | Cas 2 | Gain 2/1 | Unité |
|---|---|---|---|---|
| Padm | 1000 | 750 | - | bar |
| Tavt | 183 | 235 | 52 | °C |
| Tapt | 152 | 181 | 29 | °C |

On constate donc une augmentation de 29°C de la température des gaz d'échappement après la turbine, avant qu'ils n'arrivent au catalyseur. L'effet recherché est donc atteint.

L'invention pourra s'appliquer à un système de motorisation comportant une vanne supplémentaire soit sur la conduite de recyclage des gaz d'échappement, soit sur le conduit de refoulement, pour régler le taux de recyclage des gaz. Elle pourra également s'appliquer aux moteurs atmosphériques, aux moteurs sans recyclage des gaz d'échappement et aux moteurs équipés de filtres à particules.

## Revendications

1. Système de motorisation comportant un moteur de type Diesel (1), un circuit d'air (13, 14) pour conduire de l'air au moteur, et un catalyseur (3) recevant des gaz d'échappement issus du moteur (1) par l'intermédiaire d'une tubulure d'échappement (16), un circuit de recyclage (18, 19, 20, 21) des gaz d'échappement débouchant dans la tubulure d'admission, des moyens de détermination de la température du catalyseur, au moins une vanne (22) sur le circuit d'air (13, 14) pour étrangler sur commande le passage de l'air, et des moyens de commande (24) agissant sur la vanne (22) en fonction de la température du catalyseur (3), une augmentation de la température des gaz d'échappement arrivant au catalyseur (3) étant attendue lors d'un étranglement du passage d'air, **caractérisé en ce que** le circuit de recyclage débouche en amont de la vanne (22).

2. Système de motorisation selon la revendication 1, **caractérisé en ce que** les moyens de commande (24) pilotent un étranglement du passage d'air quand la vitesse de rotation du moteur est inférieure à 2000 tours par minute et une pression moyenne effective dans les chambres de combustion est inférieure à 4 bars.

3. Procédé de commande d'un système de motorisation comportant un moteur (1) de type Diesel, un circuit d'air (13, 14) pour conduire de l'air au moteur et un catalyseur (3) recevant des gaz d'échappement issu du moteur (1) par l'intermédiaire d'une tubulure d'échappement (16), un circuit de recyclage (18, 19, 20, 21) des gaz d'échappement débouchant dans la tubulure d'admission, procédé selon lequel on détermine la température du catalyseur (3), on agit sur au moins une vanne (22) du circuit d'air (13, 14) pour étrangler le passage de l'air, en fonction de la température du catalyseur (3), pour provoquer une augmentation de la température des gaz d'échappement arrivant au catalyseur (3), **caractérisé en ce que** le circuit de recyclage débouche en amont de la vanne (22).
